Europäisches Patentamt

European Patent Office

Office européen des brevets

(19)

(11) Veröffentlichungsnummer: **0 202 402**
**B1**

(12) **EUROPÄISCHE PATENTSCHRIFT**

(45) Veröffentlichungstag der Patentschrift:
**02.11.89**

(21) Anmeldenummer: **86102760.5**

(22) Anmeldetag: **03.03.86**

(51) Int. Cl.⁴: **A01K 7/06**

(51) Int. Cl.⁴: **A01K 7/06**

(54) Ferkeltränkebecken.

(30) Priorität: **09.03.85 DE 3508537**

(43) Veröffentlichungstag der Anmeldung:
**26.11.86 Patentblatt 86/48**

(45) Bekanntmachung des Hinweises auf die Patenterteilung:
**02.11.89 Patentblatt 89/44**

(84) Benannte Vertragsstaaten:
**FR GB IT SE**

(56) Entgegenhaltungen:
**WO-A-84/04655**
**AU-B- 474 113**
**DE-A- 2 810 110**
**DE-B- 2 213 410**
**DE-U- 8 218 670**
**DE-U- 8 404 184**
**US-A- 3 868 926**

(73) Patentinhaber: **Monoflo-Tränken-Vertriebs-GmbH & Co. KG, Mozartstrasse 16, D-6148 Heppenheim(DE)**

(72) Erfinder: **Rader, Karl-Heinz, Kirchbergstrasse 13, D-6148 Heppenheim(DE)**

(74) Vertreter: **Helber, Friedrich G., Dipl.-Ing. et al, Patentanwälte Helber & Zenz Giesser Weg 47, D-6144 Zwingenberg/Bergstrasse(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Ferkeltränkebecken mit einem Beckenkörper, einem in diesen eingesetzten Ventil und einem an dem Beckenkörper gelenkig gelagerten, auf das Ventil wirkenden Betätigungshebel, wobei das Ventil ein mit einem Außengewinde zu dessen Einschrauben in den Beckenkörper und einem Innengewinde zum Anschluß an die Wasserversorgung versehenen Anschlußstück, einen in den Beckenkörper eingesetzten Ventilsitz und einen bei nicht betätigtem Betätigungshebel gegen den Ventilsitz dichtenden Ventilstößel aufweist.

Bei einem bekannten, mit einem Ventil versehenen Ferkeltränkebecken dieser Art (DE-B 2 213 410) läßt das Ventil für die Dauer der Betätigung eines auf den Ventilstößel wirkenden Betätigungshebels den Wasserfluß in das Becken offen. Die Ferkel neigen dazu, mit dem Betätigungshebel zu spielen, ihn also länger und öfter als zur Füllung des Tränkebeckens mit Wasser erforderlich zu betätigen. Dies führt neben einem unnötigen Wasserverbrauch dazu, daß die Ferkelbox verschmutzt wird.

Bei nicht zur Füllung eines Beckens, sondern direkt in das Maul des zu tränkenden Tieres fördernden, d.h. als sogenannte «Beiß-Ventile» ausgebildeten Tränkventilen sind bereits Konstruktionen bekannt (WO 84/04655; DE-U 8 404 184), bei welchen beim Zubeißen durch das trinkende Tier nur eine gewisse Wassermenge direkt in das Maul austritt und eine weitere Wasserzufuhr also einen erneuten Beißvorgang erfordert. Bei diesen bekannten Tränkventilen ist die Ausgestaltung entweder (WO 84/04655) so getroffen, daß das Ventilbetätigungsorgan zwei getrennte mechanische Ventil-Schließmechanismen aufweist, von denen der eine in der Ruhestellung wirksame Schließmechanismus durch eine auf das Betätigungsorgan einwirkende vorgespannte Feder eine selbsttätige Unterbrechung des Wasserstroms bewirkt, während der zweite, normalerweise offene Schließmechanismus durch die vom trinkenden Tier beim Beißen auf das Betätigungsorgan erzeugte, auf ein Schließorgan übertragene Verschiebung wirksam wird. D.h. die Schließkraft des zweiten Schließmechanismus wird vom trinkenden Tier selbst aufgebracht, welches dabei also so kräftig zubeißen muß, daß nicht nur die Kraft der Schließfeder, sondern auch die vom Druck des Wasserleitungsnetzes auf das Schließorgan ausgeübte Kraft überwunden wird. Im zweiten Fall (DE-U 8 404 184) wird die Schließkraft für den zweiten Schließmechanismus dagegen durch einen vom strömenden Wasser auf einen Ventilsitz mitgenommenen, z.B. als Kugel ausgebildeten losen Sperrkörper erzeugt und dann durch den im Wasserleitungsnetz herrschenden Druck in der Schließstellung gehalten. Durch Steuerung des im Ventil vor und hinter dem Sperrkörper herrschenden Drucks mittels des Betätigungsorgans über eine Ausgleichsbohrung wird der zweite Schließmechanismus bei der Rückkehr des Betätigungsorgans in die Ausgangsstellung wieder geöffnet.

Der Erfindung liegt die Aufgabe zugrunde, ein Ferkeltränkebecken mit einem zuverlässig arbeitenden Ventil zu schaffen, welches bei Betätigung eines verschwenkbar im Becken gelagerten Betätigungshebels durch die Schnauze eines Ferkels eine bestimmte vorgegebene Wassermenge in das Becken durchtreten läßt und den Wasserzustrom dann selbsttätig unterbricht.

Erfindungsgemäß wird diese Aufgabe dadurch gelöst, daß in dem Anschlußstück mit Abstand zu dem Ventilsitz ein Sperrkörper vorgesehen ist, der eine eine Kugel aufnehmende Kammer aufweist, die mit einer Einlaßbohrung und einer ersten, durch die Kugel verschließbaren Auslaßbohrung und einer zweiten Auslaßbohrung versehen ist, daß beide Auslaßbohrungen die Kammer mit einem zwischen Sperrkörper und Ventilsitz ausgebildeten Baum verbinden, daß die zweite Auslaßbohrung bei Betätigung des Ventilstößels von diesem geschlossen wird, und daß der Ventilsitz mit einer bei Betätigung des Ventilstößels mit dem Raum zwischen Sperrkörper und Ventilsitz kommunizierenden Abflußbohrung versehen ist.

Weitere vorteilhafte Ausgestaltungen der Erfindung ergeben sich aus den Unteransprüchen sowie dem nachstehend anhand der beigefügten Zeichnung näher beschriebenen Ausführungsbeispiel eines solchen Ferkeltränkebeckens, und zwar zeigt:

Fig. 1 eine Schnittansicht eines Ausführungsbeispiels eines Ferkeltränkebeckens; und

Fig. 2 die Bauteile des Ventils des in Figur 1 gezeigten Ferkeltränkebeckens in demontiertem Zustand.

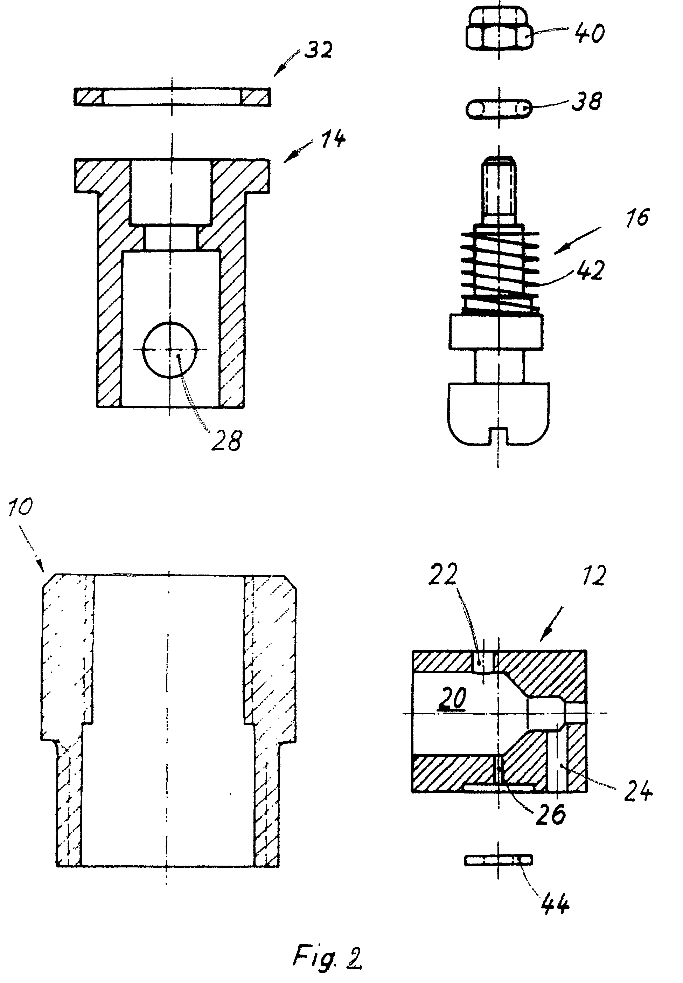

Das Ferkelbecken ist mit einem in seinen Körper 36 eingesetzten Ventil versehen, das (Fig. 2) aus einem Anschlußstück 10, einem Sperrkörper 12, einem Ventilsitz 14, einem Ventilstößel 16, einer Distanzscheibe 32, einem O-Ring 38, einer Dichtungskappe 40, einer Spiralfeder 42 und einer Dichtungsscheibe 44 beseht.

Das Anschlußstück 10 ist zum Anschluß an die das Wasser heranführende Wasserleitung an seinem oberen Abschnitt mit einem Innengewinde und an seinem unteren Abschnitt mit einem Außengewinde versehen, mittels dessen dieses in den Körper 36 des Ferkeltränkebeckens eingeschraubt ist. In den Körper 36 des Ferkeltränkebeckens ist weiter ein Ventilsitz 14 eingesetzt, der einen Ventilstößel 16 aufnimmt. Dieser Ventilstößel 16 weist einen eine Dichtung zu dem Ventilsitz 14 herstellenden O-Dichtungsring 38 und eine Kappe 40 auf, wobei eine Feder 42 den O-Dichtungsring 38 gegen den Ventilsitz 14 zieht.

Der Sperrkörper 12 ist mit einer eine Kammer 20 bildenden Bohrung versehen, die bei dem gezeigten Ausführungsbeispiel radial ver läuft. Dieser Sperrkörper 12 weist eine Einlaßbohrung 22, eine erste Auslaßbohrung 24 und eine zweite Auslaßbohrung 26 auf. Die Kammer 20 nimmt weiter eine erste Kugel 18 und eine zweite Kugel 34 auf, wobei die erste Kugel 18 in der Ruhestellung die zweite Bohrung 26 und nach Betätigung des Ventilstößels 16 die erste Bohrung 24 versperrt.

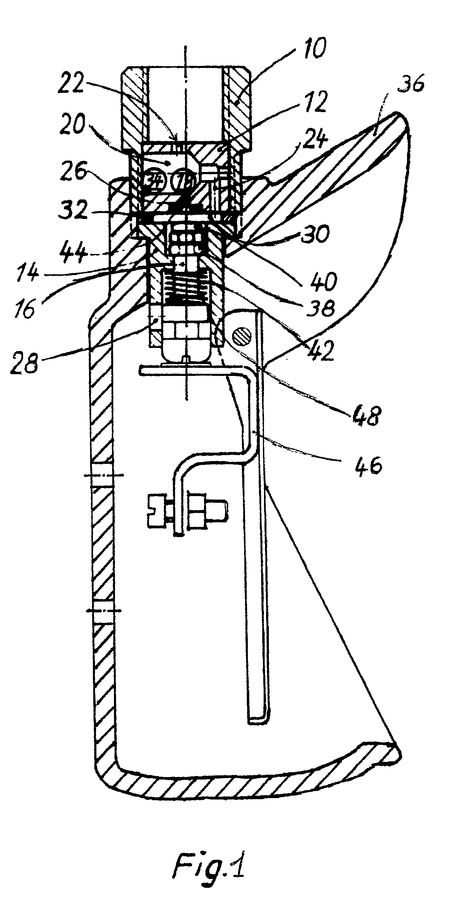

Bei Betätigung des Betätigungshebels 46 wird der Ventilstößel 16 gegen die Kraft der Feder 42 nach oben geschoben, wodurch die Kappe 40 des Stößels 16 gegen den die zweite Bohrung 26 umgebenden Dichtungsring 44 stößt und so die zweite Bohrung 26 verschließt. Dabei wird der O-Dichtungsring 38 von dem Ventilsitz 14 abgehoben, so daß ein Wasserstrom durch die Einlaßbohrung 22, die Kammer 20, die erste Bohrung 24, den Raum 30, die Öffnung zwischen dem O-Dichtungsring 38 und dem Ventilsitz 14 an einer Abflachung 48 des Stößels 16 vorbei aus der Abflußbohrung 28 in das Ferkelbecken hinein möglich wird. Dieser Wasserstrom verursacht, daß sich die erste Kugel 18 in Figur 1 nach rechts in den kegelig ausgebildeten Endabschnitt dieser Kammerbohrung verlagert und damit die erste Bohrung 24 verschließt. Das unten abfließende Wasser verursacht dabei einen Unterdruck in der ersten Bohrung 24, der die Kugel 18 in einer die erste Bohrung 24 versperrenden Position hält, so lange der Ventilstößel 16 die zweite Bohrung 26 versperrt. Nach Lösen des Ventilstößels 16 strömt Wasser aus der Kammer durch die zweite Bohrung 26 in den Raum 30 und sorgt für einen Druckausgleich, der ein Abfallen der Kugel 18 von dem kegelig ausgebildeten, mit der ersten Bohrung 24 kommunizierenden Endabschnitt der Kammerbohrung bewirkt. Die Kugel 18 versperrt sodann die zweite Bohrung 26. In dieser Stellung ist zwar die erste Bohrung 24 wieder geöffnet, ein Wasserausfluß aus dem Ventil wird jedoch durch den auf den Ventilsitz 14 aufsitzenden Ventilring des Ventilstößels 16 verhindert.

Bei jeder Betätigung des Hebels 16 wird also lediglich eine bestimmte Wassermenge ausfließen, die definiert ist durch die Größe des Raumes 30 zwischen dem Ventilstück 12 und dem Ventilsitz 14, dem Volumen der ersten Bohrung 24 sowie der durch die Bohrung 24 vor deren Verschluß durch die Kugel 18 fließenden Wassermenge, wobei die Wassermenge von dem jeweils herrschenden Wasserdruck weitgehend unabhängig ist.

Die zweite Kugel 34 dient dazu, die Kugel 18 an einer Verlagerung weg von der zweiten Bohrung 26 zu hindern, so daß diese bei Nichtbetätigung des Ventilstößels 16 die zweite Bohrung 26 versperrt und damit benachbart zu der ersten Bohrung 24 gehalten wird.

Es versteht sich, daß dies auch durch eine entsprechende Wandung bewirkt werden kann. Weiter muß die Kammer 20 nicht als radiale Bohrung in dem zylindrischen Ventilstück 12 ausgebildet sein, sie kann vielmehr auch als axiale Bohrung ausgebildet werden. Auch können beide Auslaßbohrungen 24, 26 nebeneinander angeordnet sein.

Bei diesem Ausführungsbeispiel ist wesentlich, daß die zweite Bohrung 26 sehr fein ausgebildet ist, also nur einen geringen Wasserstrom ermöglicht. Die Funktion dieser zweiten Bohrung 26 ist lediglich, nach Lösen des Betätigungshebels 46 und Absenken des Stößels 16 einen Druckausgleich in dem Raum 30 zu bewirken, der zu einem Abfallen der Kugel 18 von der ersten Bohrung 24 zu bewirken.

Das gezeigte Ventil für Ferkeltränkebecken ist besonders einfach zu montieren, indem die aus Stößel 16 und Ventilsitz 14 bestehende erste Ventilstufe in eine entsprechende Bohrung in dem Körper 36 des Tränkebeckens eingesetzt wird. Sodann wird der Distanzring 32 auf den Ventilsitz 14 aufgelegt, wobei durch die Wahl der Stärke dieses Distanzringes 32 die Größe des Raumes 30 und damit die bei einer Betätigung des Betätigungshebels 46 ausfließende Wassermenge beeinflußt werden kann. Nach Einsetzen des Dichtungsrings 44 in eine entsprechende Ausnehmung in dem Sperrkörper 12 wird dieses in das Anschlußstück 10 eingepreßt und dieses sodann mit seinem mit einem Außengewinde versehenen unteren Abschnitt in ein entsprechendes Gewinde in dem Körper 36 des Tränkebeckens eingeschraubt.

**Patentansprüche**

1. Ferkeltränkebecken mit einem Beckenkörper (36), einem in diesen eingesetzten Ventil und einem an dem Beckenkörper (36) gelenkig gelagerten, auf das Ventil wirkenden Betätigungshebel (46), wobei das Ventil ein mit einem Außengewinde zu dessen Einschrauben in den Beckenkörper und einem Innengewinde zum Anschluß an die Wasserversorgung versehenen Anschlußstück (10), einen in den Beckenkörper (36) eingesetzten Ventilsitz (14) und einen bei nicht betätigtem Betätigungshebel (46) gegen den Ventilsitz dichtenden Ventilstößel (16) aufweist, dadurch gekennzeichnet, daß in dem Anschlußstück (10) mit Abstand zu dem Ventilsitz (14) ein Sperrkörper (12) vorgesehen ist, der eine eine Kugel (18) aufnehmende Kammer (20) aufweist, die mit einer Einlaßbohrung (22) und einer ersten, durch die Kugel (18) verschließbaren Auslaßbohrung (24) und einer zweiten Auslaßbohrung (26) versehen ist, daß beide Auslaßbohrungen (24, 26) die Kammer (20) mit einem zwischen Sperrkörper (12) und Ventilsitz (14) ausgebildeten Raum (30) verbinden, daß die zweite Auslaßbohrung (26) bei Betätigung des Ventilstößels (16) von diesem geschlossen wird, und daß der Ventilsitz (14) mit einer bei Betätigung des Ventilstößels (16) mit dem Raum (30) zwischen Sperrkörper (12) und Ventilsitz (14) kommunizierenden Abflußbohrung (28) versehen ist.

2. Ferkeltränkebecken nach Anspruch 1, gekennzeichnet durch einen zwischen Ventilsitz (14) und Sperrkörper (12) in das Anschlußstück (10) eingelegten, die Höhe des Raumes (30) definierenden Distanzring (32).

3. Ferkeltränkebecken nach Anspruch 1 oder Anspruch 2, gekennzeichnet durch einen die Bohrung (26) umgebenden, mit der Kappe (40) des Ventilstößels (16) zusammenwirkenden Dichtungsring (44).

4. Ventil nach einem der Ansprüche 1 bis 3, dadurch gekennzeichnet, daß die Ventilkammer (20) als radiale Bohrung in dem zylindrischen Sperrkörper (12) ausgebildet ist, wobei die erste Auslaßbohrung (24) von dem kegelig ausgebildeten Endabschnitt dieser Kammerbohrung nach unten zu dem Raum (30) zwischen Sperrkörper (12) und dem Ventilsitz (14) verläuft.

5. Ventil nach einem der Ansprüche 1 bis 4, gekennzeichnet durch eine von der Kammer (20) aufgenommene zweite, die erste Kugel (18) positionierende zweite Kugel (34).

## Claims

1. Piglet drinking bowl with a bowl body (36), a valve inserted into the latter and an actuating lever (46) mounted in articulated fashion on the bowl body (36) and acting on the valve, the valve having a connection piece (10) provided with external thread for screwing it into the bowl body and an internal thread for connecting it to the water supply, a valve seat (14) inserted into the bowl body (36) and a valve tappet (16) fitting sealingly against the valve seat when the actuating lever (46) is not actuated, characterized in that a blocking member (12) is provided in the connection piece (10) at a distance from the valve seat (14), which blocking member has a chamber (20) which accommodates a ball (18) and is provided with an inlet bore (22) and a first outlet bore (24), which can be closed by the ball (18), and a second outlet bore (26), in that the two outlet bores (24, 26) connect the chamber (20) to a space (30) formed between blocking member (12) and valve seat (14), in that, when the valve tappet (16) is actuated, the second outlet bore (26) is closed by said tappet, and in that the valve seat (14) is provided with a discharge bore (28) which communicates with the space (30) between blocking member (12) and valve seat (14) when the valve tappet (16) is actuated.

2. Piglet drinking bowl according to claim 1, characterized by a spacer ring (32) which is inserted into the connection piece (10) between valve seat (14) and blocking member (12) and defines the height of the space (30).

3. Piglet drinking bowl according to claim 1 or claim 2, characterized by a sealing ring (44) which surrounds the bore (26) and cooperates with the cap (40) of the valve tappet (16).

4. Valve according to one of claims 1 to 3, characterized in that the valve chamber (20) is designed as a radial bore in the cylindrical blocking member (12), the first outlet bore (24) extending downwards from the conically shaped end portion of this chamber bore to the space (30) between blocking member (12) and the valve seat (14).

5. Valve according to one of claims 1 to 4, characterized by a second ball (34) which is accommodated by the chamber (20) and positions the first ball (18).

## Revendications

1. Abreuvoir pour porcelets comportant un corps (36), une soupape montée dans celui-ci et un levier de manœuvre (46) articulé au corps (36) et agissant sur la soupape, la soupape présentant un raccord (10) pourvu d'un filetage extérieur pour son vissage dans le corps et d'un filetage intérieur pour le raccordement à l'alimentation en eau, un siège (14) monté dans le corps (36) et un poussoir (16) réalisant l'étanchéité vis-à-vis de ce siège lorsque le levier de manœuvre (46) n'est pas actionné, caractérisé par le fait que dans le raccord (10) est prévu, à une certaine distance du siège (14), un corps d'arrêt (12) qui présente une chambre (20) recevant une bille (18) et pourvue d'un trou d'admission (22), d'un premier trou d'émission (24) pouvant être obturé par la bille (18) et d'un deuxième trou d'émission (26), que les deux trous d'émission (24, 26) relient la chambre (20) à un espace (30) formé entre le corps d'arrêt (12) et le siège (14), que le deuxième trou d'émission (26) est fermé par le poussoir (16) quand celui-ci est actionné, et que le siège (14) est pourvu d'un trou d'écoulement (28) qui, lorsque le poussoir (16) est actionné, communique avec l'espace (30) entre le corps d'arrêt (12) et le siège (14).

2. Abreuvoir pour porcelets selon la revendication 1, caractérisé par un anneau entretoise (32) placé dans le raccord (10) entre le siège (14) et le corps d'arrêt (12) et déterminant la hauteur de l'espace (30).

3. Abreuvoir pour porcelets selon l'une des revendications 1 et 2, caractérisé par un joint annulaire d'étanchéité (44) entourant le trou (26) et coopérant avec le capuchon (40) du poussoir de soupape (16).

4. Soupape selon l'une des revendications 1 à 3, caractérisée par le fait que sa chambre (20) est constituée d'un alésage radial dans le corps cylindrique d'arrêt (12), le premier trou d'émission (24) s'étendant vers le bas de la partie d'extrémité conique de cet alésage-chambre à l'espace (30) entre le corps d'arrêt (12) et le siège de soupape (14).

5. Soupape selon l'une des revendications 1 à 4, caractérisée par une deuxième bille (34) logée dans la chambre (20) et positionnant la première bille (18).

Fig.1

Fig. 2